# EUROPEAN PATENT APPLICATION

(11) **EP 3 301 960 A1**
(43) Date of publication of application: **04.04.2018**
(21) Application number: 16306282.1
(22) Date of filing: 30.09.2016
(51) Int. Cl.: H04W 12/08, H04L 29/06, H04W 4/00, G07C 9/00

(54) **AN ACCESS DELEGATION SYSTEM FOR AN OWNER USER TO DELEGATE TO A DELEGATE AN AUTHORIZATION FOR ACCESSING TO A RESOURCE**

(71) Applicant: GEMALTO SA, 92190 Meudon (FR)
(72) Inventor: LESAS, Anne-Marie, 92190 Meudon (FR); LENGELLÉ, Denis, 92190 Meudon (FR)
(74) Representative: Delaval, Guillaume Laurent

(57) **Abstract**

This invention relates to an access delegation system (305) for an owner user to delegate to a delegate (300) an authorization for accessing to a resource (303), the access delegation system (305) being configured to generate upon request of the owner user a set of digital characters called delegation token attributed to the delegate to access to the resource, the delegation token being associated to a set of at least one delegation rule defining the conditions of access to the resource for the delegate such that the delegation rules are verified by the access delegation system (305) when receiving from the delegate the delegation token to which said set of at least one delegation rule is associated, the access to the resource (303) being granted for the delegate upon positive verification.

## Description

### TECHNICAL FIELD

The present invention relates to an access delegation system for an owner user to delegate to a delegate an authorization for accessing to a resource. It is applicable to the Internet of things.

### BACKGROUND OF THE INVENTION

According to the Recommendation ITU-T Y.2060 provided by the International Telecommunication institute, the Internet of things is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks.

In network interconnecting different things, an owner user is a person who has permissions that allow him to access to different resources around him or her.

These resources can be for example video surveillance data, remote control of the heating system and energy, door opening systems using contactless badges is widely deployed and shared, vehicles controlled by smartphones, household devices that can be managed by smartphones, Internet Service Providers integrating automation solutions in their set-top boxes such as alarm systems.

In the near future, the owner will face the multiplication of mobile applications and contactless solutions to control his environment. In this ecosystem, several questions can be raised:
- how to allow the owner to delegate smart connected objects access to different delegates or group of delegates?
- how can the owner define time-boxed access control? For example, can the owner give access to his house to a delegate for a certain amount of time or for a defined period only, the main door being the smart connected resource in this case?
- how can the owner restrict a delegate to a restricted access of resources? As an example, parents may want to forbid to access certain TV programs for their children.
- how to provide a trusted and standardized environment for access control and delegation management of heterogeneous resources? For example, is somebody who is authorized to use a coffee machine also authorized to use the washing machine?
- in a world where smart connected resources are shared by several persons (owner and delegates), can each person define usage preferences per resource that exclusively apply for him or her?

### SUMMARY OF THE INVENTION

This invention relates to an access delegation system for an owner user to delegate to a delegate an authorization for accessing to a resource, the access delegation system being configured to generate upon request of the owner user a set of digital characters called delegation token attributed to the delegate to access to the resource, the delegation token being associated to a set of at least one delegation rule defining the conditions of access to the resource for the delegate such that the delegation rules are verified by the access delegation system when receiving from the delegate the delegation token to which said set of at least one delegation rule is associated, the access to the resource being granted for the delegate upon positive verification.

According to one example, the access delegation system is configured to store a set of at least one credential attributed to the owner user to access to the resource, said set of at least one credential being used to grant the access to the resource for the delegate once the delegation token validity has been verified and the delegation rules fulfilled.

According to one example, the set of at least one credential is acquired from a service provider operating the resource.

According to one example, the access delegation system is further configured to receive an access request from the delegate or from the resource after the reading of the token provided by the delegate comprising a delegation token, to verify that the received delegation token is memorized by the system and that the delegation rules are fulfilled before granting the access to the resource for the delegate.

The invention also relates to a token-based method for delegating by an owner user to a delegate an authorization for accessing to a resource, comprising the steps of:
- receiving a request from the owner user to set up an authorization for a delegate to access to the resource;
- providing a set of at least one delegation rule defining the conditions of access to the resource for the delegate;
- generating a delegation token to be provided to the delegate for accessing the resource;
- memorising the delegation token and associating it to the said set of at least one delegation rule into a database, in a way that when receiving from the delegate the delegation token to which said set of at least one delegation rule is associated, the access to the resource is granted for the delegate upon positive verification.

According to an aspect of the invention, the token-based method comprises the step of transmitting the delegation token to the delegate upon request of said delegate.

According to one example, the set of at least one delegation rule is sent to the access delegation system together with the delegation request.

According to one example, the set of delegation rules comprises a validity period of the delegation token.

According to one example, the set of delegation rules comprises an authorization identifier.

According to one example, the set of delegation rules comprises an authorization validity period indicating the time duration during which the access to the resource is authorized.

According to one example, the set of delegation rules is transmitted together with at least an information related to the delegate among: a user identifier, a contact information for notifying the delegate of the availability of the delegation token.

According to one example, a delegation token is associated to a given authorization to access a resource for a single delegate or for a plurality of delegates.

According to one example, a resource is identified into the access delegation system by an identifier.

According to one example, the token-based method comprises the step of receiving a request from the delegate to get the generated delegation token, the request message comprising for example an identifier of the delegate (202), an identifier of the authorisation of access to the resource and authentication data adapted to authenticate the delegate.

### RIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 provides a simplified representation of a system allowing a delegate to access to a resource;
- Figure 2 provides an example of sequence diagram illustrating the enrolment of an access delegation;
- Figure 3 provides an example of sequence diagram illustrating the access to a resource by a delegate when an access delegation control terminal is hosted by a delegate's mobile device;
- Figure 4 provides an example of sequence diagram illustrating the access to a resource by a delegate when an access delegation control terminal is hosted in the resource to be accessed.

### DETAILED DESCRIPTION

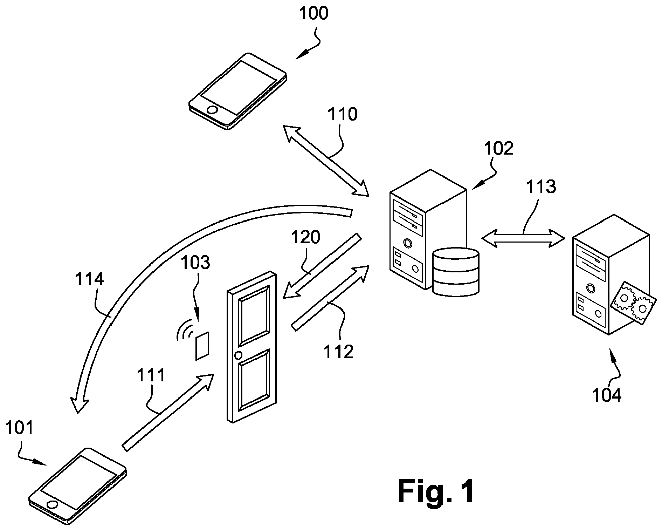

**Figure 1** provides a simplified representation of a system allowing a delegate to access to a resource.

The method and the system according to the invention provide a solution to allow an owner user, for example via his mobile device 100, to administrate one or a plurality of resources 103 possibly acquired from different providers and finely setup token-based access control authorizations for different delegates, using for example his mobile device 101.

In this example the resource is a door opening and closing system 103. However, the skilled person will understand that over type of resources can be also considered in the context of this invention, for example a smart household device, a smart TV or a smart car.

The interfaces used to manage the resources may be provided by different third party providers. In this example, the proposed system may be connected to a resource management interface provided by a third party provider 104.

In this description, the term "token" refers to a set or string of digital characters usable to substitute another set or string of characters. More precisely, the token replaces the credentials that are never shared with the delegates. The token may have the same number of characters as the string being replaced or a different number of characters. The characters are for example of alphanumeric type.

The expression "delegation token" is used to indicate token generated by an access delegation system 102 to identify uniquely an authorization record.

In this description, the expression "owner user" is herein used to indicate a person who has permissions that allow him to access to different resources around him or her. Further, the user owner is the administrator of the resource access authorizations that are managed by the access delegation system 102. As an example, the delegation token is a substitute of a login and a password that have been attributed to the user owner.

According to one embodiment, the owner user is able to manage from the access delegation system 102 the list of available resources, the delegates and their respective authorizations. The owner user can also trigger the generation of one or several delegation tokens for a given delegate. He can also notify the delegate once a delegation token is available for him.

The delegate is the end-user recipient of a delegation token. The delegates are often assimilated to the devices 100, 101 they use to access to the resources, but the skilled person will understand that the delegate is a person that uses a device 101 to access to a given resource 103. Similarly, the user owner is a person that uses a device 100 to delegate an authorization to access to a given resource 103.

The delegate is able to get the delegation token from the access delegation system 102 and to store it into a device 101. This device is for example a wearable device or a smartphone and can be used for accessing to a given resource 103 according to one or several authorization rules memorized in the access delegation system.

An access delegation system 102 is a system, for example a server, allowing to set up a delegation of an access authorization from an owner user 100 to a delegate 101 to a resource 103 that can be monitored by a service provider. The access delegation system 102 can be accessed securely and is preferably protected by well-known technologies for one with normal skills of the art where at least enforced authentication is required, for example in a HTTPS/SSL environment cryptography-based with the management of Public Key Infrastructure (PKI) certificates.

The delegation token is associated with a set of one or several delegation rules in which the resource access is authorized for the delegate user including but not limited to:
- a validity period of the delegation token;
- an authorization identifier;
- an authorization validity period;
- information related to the delegate such as: a user identifier, a contact information for notification, a profile that may be inherited from a group profile and/or an authentication mode;
- additional information such as: an identifier of the resource, a resource type, information required for the activation, information related to the service provider (SP) if needed for example when the authorization delegation system needs to trigger the activation or access from the resource's provider, schedule of use;
- preferences of use as the system may allow the setup of resource configuration to be automatically configured according preferences of use when the resource is accessed.

The association is done by memorizing the delegation token together or with a link to the associated delegation rules so that if the access delegation server knows the value of the delegation token, it is then able to determine unambiguously to which set of delegation rules it is associated with.

According to one embodiment, the delegation token is associated to a single delegate even if the authorization is linked to one or several groups of users. Alternatively, the delegation token can be associated to a group of users linked to a given authorization.

In some configurations, the resource can be interfaced by third-party systems 104 belonging to a resource provider. In that case, the activation or access of the resource 103 may request the authorization delegation server 102 to retrieve activation or access credentials or trigger an activation or access through the service provider's 104 interface 113.

As a summary, according to this example, a user owner using its connected device 100 will delegate 110 to a delegate 101 its authorization to access to a resource 103. An access delegation system 102 stores a delegation token for the delegate 102 and a set of at least one associated delegation rule. The delegation token can then be transmitted 114 to the connected device 101 used by the delegate. Then, the delegate is able to use it to request 111 the access to the resource 103. The resource 103 will then transmit 112 the delegation token to the access delegation server 102. In case credentials are needed by the resource 103 to grant access to the service, those can either be memorized by the access delegation server 102 and transmitted 120 to the resource 103 or requested 113 to a third party, for example a service provider 104 before being sent 120 to the resource. The resource 103 then checks the credentials and in case of a positive verification, the access is granted.

According to one aspect of the invention, a wearable object hold by the delegate user can be used to access to a given resource. In that case, the wearable object is configured to store and optionally update the digital token. Recent development of contactless technologies hallowed the diversification of digital data carriers which can be embedded into a cell phone and also in many objects, for example into a jewel such as a ring or a bracelet, into a watch, a smart card, a visual code (QR code or barcode), a USB key, a key fob, any wearable object or any object which is digitally readable or connected to the network. As an example, the wearable object can be a RFID/NFC tag including an electronic memory and a contact or contactless communication interface. According to another example, the wearable object can be an object with an irDa or Li-Fi interface. According to another example, the wearable object can be a "just readable" object or a "communicating" object.

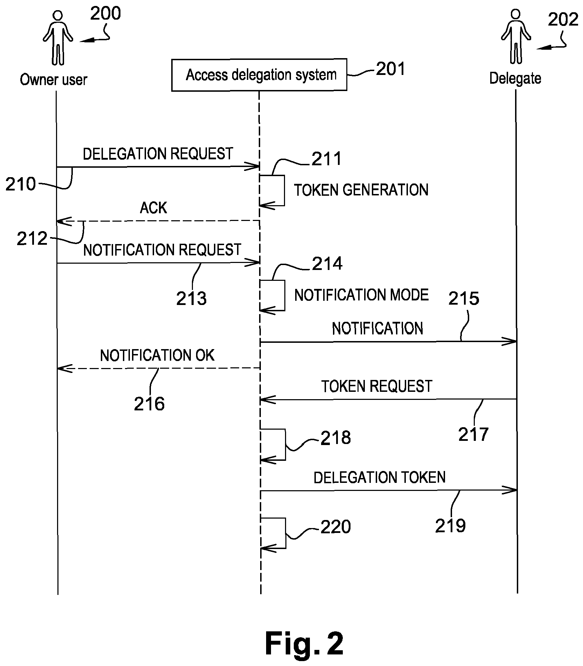

**Figure 2** provides an example of sequence diagram illustrating the enrolment of an access delegation.

In this example, a resource owner 200 wants to delegate the access to a given resource to a delegate 202. For that purpose, an access delegation system 201 is used.

The access delegation system (ADS) provides user interfaces with two main roles.

A first interface is required for the owner user to manage the access authorizations to the resources.

A second interface is needed by the delegate for its enrolment and the retrieval of the delegation token. This interface can also be used to update information stored in the access delegation system related to a given delegation.

The enrolment of a delegate 202 by the resource owner 200 can be initiated by the resource owner 200 who will send a delegation request 210 to the access delegation system 201. This request can be transmitted together with an authorization number and an identifier of the delegate 202.

The delegation rules can be defined by the owner user 200 and sent to the access delegation system 201 together with the delegation request 210. In an alternative example, the delegation rules can be transmitted to the access delegation system 201 in a message distinct from the request 210, and at another time. For example, the delegation rules can be set up or updated after that the delegation token is generated.

Then, the access delegation system 201 generates 211 a delegation token for the identified delegate.

Once successfully generated, an acknowledgement message can be sent 212 to the resource owner 200.

The user owner 200 sends a request 213 for the delegate to be notified about the availability of the delegation token. This request 213 can be send together with an authorization number and the identifier of the delegate.

In an alternative aspect of the invention the notification request 213 is processed automatically by the access delegation system 201 after the token generation 211 without further request 212 from the user owner 200.

The access delegation system then determines 214 which notification mode has to be used. This can be determined for example using a function by providing the identifier of the delegate. It is assumed that the access delegation system 201 already knows the delegate 202 and the communication capabilities associated to the delegate. The notification mode corresponds for example to a transmission by email or by SMS (Short Message Service). Once the notification mode is determined, the delegate is notified 215 of the availability of the delegation token. The resource owner 200 can be informed 216 by the access delegation system 201 that the delegate 202 has been correctly notified.

The delegate 202 can now request 217 the delegation token. The request message comprises for example an identifier of the delegate 202, an identifier of the authorisation and authentication data adapted to authenticate the delegate 202.

The access delegation system 201 then checks 218 the validity of the request and the availability of the delegation token corresponding to this request. If the result is positive, the delegation token is transmitted 219 to the delegate 202. Then, a delegation status 220 is updated by the access delegation server 201 in order to memorize that the delegate is in possession of a delegation token.

According to an aspect of the invention, each resource is identified into the access delegation system 201 by an identifier.

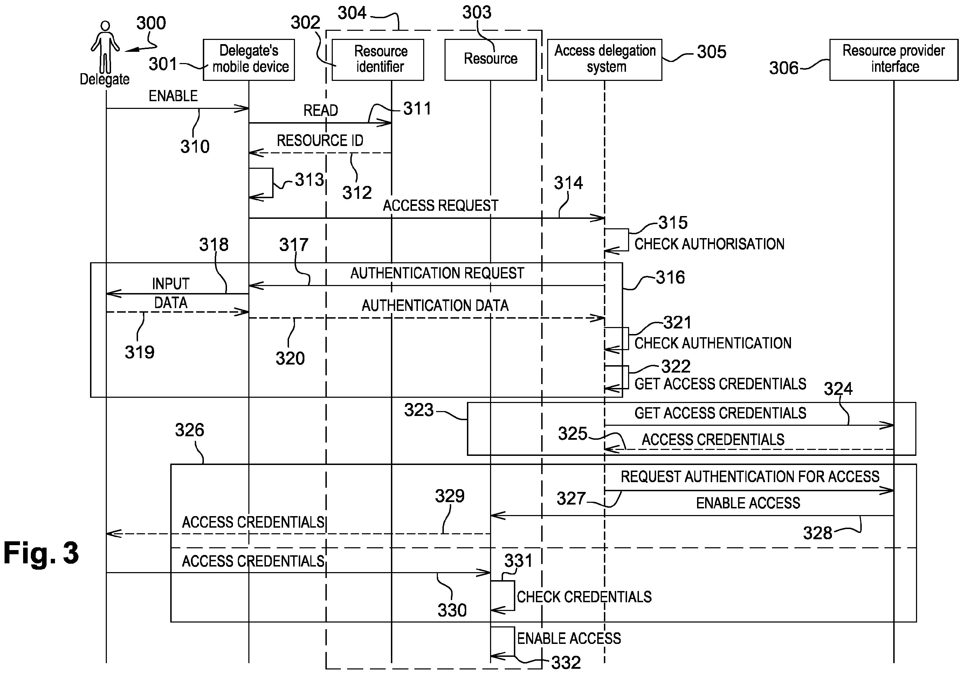

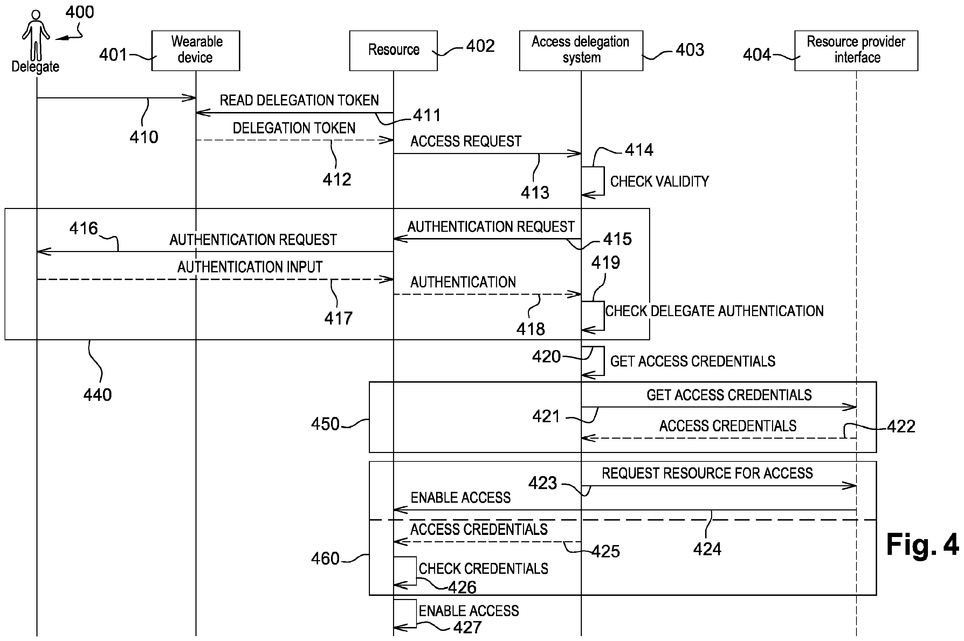

Two examples illustrating how a given resource is accessed by a delegate provisioned with a delegation token are illustrated thanks to **Figure 3** and **Figure 4****.**

**Figure 3** provides an example of sequence diagram illustrating the access to a resource by a delegate when an access delegation control terminal is hosted by a delegate's mobile device.

According to this example, a mobile device 301 is used by the delegate 300 to access to a targeted resource 303. The targeted resource can be for example a door, a coffee machine, television, a washing machine or any kind of connected device or digital service accessible via the connected device requiring an access control to be activated or accessed.

At the beginning, the delegate 300 enables 310 its mobile device 301 to detect and read information provided by a resource equipment 304. The resource equipment 304 is composed of a resource 303 associated to a resource identifier 302.

A resource identifier 302 can be digitally readable by the delegate's_mobile device 301. The resource identifier can be made available using for example a QR code, a barcode, a Near Field Communication (NFC) tag, a light-based system, a micro-ship, or any kind of digitally readable medium.

Once positioned near the resource equipment 304, the mobile device acquires 311, 312 the resource identifier. The mobile device 301 gets 313 the delegation token that is in this example memorized in its internal memory.

The delegate's mobile device 301 is configured to communicate with the access delegation system 305.

An access request 314 containing the resource identifier and the delegation token is then sent to the access delegation system 305. The access delegation system 305 checks 315 that the delegate is authorized to access to the resource identified by the resource identifier 302. For that purpose, it checks the token validity. A way to check the validity of the delegation token is for example to verify one or several delegation rules memorised for the delegate by the access delegation system 305. For that purpose, a timestamp and the resource identification can be used. The timestamp indicates the time at which the access request to the identified resource is made. If a delegation rules associated to the delegation token states that the access is allowed during a given time period and that the timestamp is outside of this period of time, the delegation token is considered as invalid. Otherwise, if the provided token exists and that the delegation rules are verified, the delegation token is considered as valid.

According to an embodiment, the delegate can then be authenticated 316. For that purpose, an authentication request 317 is sent to the mobile device 301. The delegate is requested 318 to authenticate and enters 319 for example a personal identification number (PIN) code or presents its fingerprint in front of a reader embedded into the mobile device 301. The authentication data, for example the PIN code or the biometric data, is then transmitted 320 to the access delegation system 305 and checked 321.

If the result of the checks 315, 321 are successful, then the access delegation system 305 can retrieve 322 in its memory the data required to access to the service, for example a credential in a form of a resource access code adapted for the mobile device 301 to access to the targeted resource 303.

According to an alternative embodiment 323, the access delegation system 305 contacts the service provider through a service provider interface 306 by sending a request 324 to get 325 the credentials required to access the targeted resource. The request 324 can be sent together with information related to the resource owner. This can be useful when the access delegation system 305 does not know yet the credentials that are required for accessing to the targeted resource. In that case, when the delegate 300 first uses its delegation token, the access delegation system 305 has to request the needed credentials.

Other alternatives can also be considered. For example, the credentials can be requested at the time of setting up the delegation that is to say when requesting and generating the delegation token. According to another alternative, the required credentials may be already memorized by the access delegation server 305 and used for a plurality of delegations.

According to the invention, the delegation token and the credentials that are appropriate to access to the targeted resource operated by a service provider are linked by the access delegation server 305. This means that for a given delegation token, the access delegation server 305 knows which credentials are usable to authorize the access to the targeted resource 302.

As already underlined, it is also possible to associate the delegation token to one or several delegation rules. For example, the generated token for the delegate has a beginning and an ending period of validity or a number of times validity which is decreased each time of use until it cannot be used anymore. The token authorization can also be restricted for a scheduled used (for selected days of the week, selected times of the day, once or periodically until the ending validity or for the number of times validity). This may require an additional software component which disconnects the access to the resource that is activated by the delegate using the token when the authorized access is elapsed.

Then, the access can be enabled 326 using different options. For example, the access delegation system 305 requests 327 the resource access for the delegate to the resource service provider. The access is enabled 328 by the service provider sending a message 328 to the resource 303.

According to another example, the access delegation server sends 329 the access credentials required for the access to the delegate's mobile device 301. The delegate 300 then uses its mobile device 301 to transmit 330 the access credentials to the resource 303. The resource 303 then checks 331 if the received credentials are correct. In case of positive checks, the access is enabled 332.

At this stage, the access delegation system is provisioned for the delegate with a delegation token and with the credentials required to access to the targeted resources.

**Figure 4** provides another example of sequence diagram illustrating the access to a resource by a delegate when an access delegation control terminal is hosted in the resource to be accessed.

In this example, the delegate 400 uses a wearable device 401 provisioned with a delegation token to access to the targeted resource 402.

The wearable device 401 is placed by the delegate 400 in close proximity of the targeted resource 402. The targeted resource 402 can be for example a door, a coffee machine, television, a washing machine or any kind of connected device requiring an access control to be activated or accessed.

The delegate's wearable device 401 is configured to by readable by the resource 402. The delegation token is read 411, 412 by the resource 402. An access request 413 is transmitted by the resource 402 to the access delegation system 403. This request comprises the delegation token. The validity of the delegation token can then be checked 414 by the access delegation system 403.

If required, the delegate can be authenticated 440. For that purpose, an authentication request 415 is sent to resource 402. Then, the delegate 400 is requested 416 to enter 417 authentication data from the resource 402 user interface. The authentication data, for example a PIN code, is then transmitted 418 to the access delegation system 403 and checked 419.

If the result of the checks 414, 419 are successful, then the access delegation system 403 can retrieve 420 in its memory the credentials required to access to the service.

According to an alternative embodiment 450, the access delegation system 403 contacts the service provider through a service provider interface 404 by sending a request 421 to get 422 the credentials required to access the targeted resource 402. The request can be sent together with information related to the resource owner retrieved from the access delegation system 403. This can be useful when the access delegation system 403 does not know yet the credentials that are required for accessing to the targeted resource 402 or when the resource requires dynamic (temporal) credentials (for example, one-time use credentials). In that case, when the delegate 400 uses its delegation token, the access delegation system 403 has to request the needed credentials at the time of the access request.

According to the invention, the delegation token, the delegation rules and the credentials that are appropriate to access to the targeted resource 402 operated by a service provider are linked by the access delegation system 403. This means that for a given delegation token, the access delegation system 403 knows which credentials are usable to authorize the access to the resource 402.

Then, the access can be enabled 460 using different options. For example, the access delegation system 403 requests 423 to the resource service provider 404 the access to the resource. The access is enabled 424 by the service provider 404 sending a message 424 to the resource 402.

According to another example, the access delegation server 403 sends 425 the access credentials required for the access to the resource 402. The resource then checks 426 if the received credentials are correct.

In case of a positive check, the access is enabled 427.

## Claims

1. An access delegation system (102, 201, 305, 403) for an owner user (200) to delegate to a delegate (202, 300, 400) an authorization for accessing to a resource (103, 303, 402), the access delegation system (102, 201, 305, 403) being configured to generate (211) upon request (210) of the owner user (200) a set of digital characters called delegation token attributed to the delegate to access to the resource, the delegation token being associated to a set of at least one delegation rule defining the conditions of access to the resource for the delegate such that the delegation rules are verified by the access delegation system (102, 201, 305, 403) when receiving from the delegate the delegation token to which said set of at least one delegation rule is associated, the access to the resource (303, 402) being granted for the delegate upon positive verification.

2. An access delegation system (102, 201, 305, 403) according to claim 1 configured to store a set of at least one credential attributed to the owner user to access to the resource (103, 303, 402), said set of at least one credential being used to grant the access to the resource for the delegate once the delegation token validity has been verified and the delegation rules fulfilled.

3. An access delegation system (102, 201, 305, 403) according to claim 2, wherein the set of at least one credential is acquired from a service provider (104) operating the resource (103, 303, 402).

4. An access delegation system (102, 201, 305, 403) according any of the preceding claims being further configured to receive an access request (314) from the delegate delegate or from the resource (413) after the reading of the token provided by the delegate (411, 412) comprising a delegation token, to verify that the received delegation token is memorized by the system and that the delegation rules are fulfilled before granting the access to the resource for the delegate.

5. A token-based method for delegating by an owner user to a delegate an authorization for accessing to a resource, comprising the steps of:
- receiving a request (210) from the owner user (200) to set up an authorization for a delegate (202) to access to the resource;
- providing a set of at least one delegation rule defining the conditions of access to the resource for the delegate;
- generating (211) a delegation token to be provided to the delegate for accessing the resource;
- memorising the delegation token and associating it to the said set of at least one delegation rule into a database, in a way that when receiving from the delegate the delegation token to which said set of at least one delegation rule is associated, the access to the resource (303, 402) is granted for the delegate upon positive verification.

6. The token-based method according to claim 5, comprising the step of transmitting (219) the delegation token to the delegate (202) upon request (217) of said delegate (202).

7. The token-based method according to claim 5 or 6, wherein the set of at least one delegation rule is sent to the access delegation system (201) together with the delegation request (210).

8. The token-based method according to any of claims 5 to 7, wherein the set of delegation rules comprises a validity period of the delegation token.

9. The token-based method according to any of claims 5 to 8, wherein the set of delegation rules comprises an authorization identifier.

10. The token-based method according to any of claims 5 to 9, wherein the set of delegation rules comprises an authorization validity period indicating the time duration during which the access to the resource is authorized.

11. The token-based method according to any claims 5 to 10, wherein the set of delegation rules is transmitted together with at least an information related to the delegate among: a user identifier, a contact information for notifying the delegate of the availability of the delegation token.

12. The token-based method according to any of claims 5 to 11, wherein a delegation token is associated to a given authorization to access a resource for a single delegate or for a plurality of delegates.

13. The token-based method according to any claims 5 to 12, wherein a resource is identified into the access delegation system (201) by an identifier.

14. The token-based method according to any of claims 5 to 13, comprising the step of receiving a request (217) from the delegate to get the generated delegation token, the request message comprising for example an identifier of the delegate (202), an identifier of the authorisation of access to the resource and authentication data adapted to authenticate the delegate (202).
